# EUROPÄISCHE PATENTSCHRIFT

(11) **EP 1 754 690 B1**
(45) Veröffentlichungstag und Bekanntmachung des Hinweises auf die Patenterteilung: **02.07.2008**
(21) Anmeldenummer: 06017192.3
(22) Anmeldetag: 17.08.2006
(51) Int. Cl.: C03C 17/00, C03C 17/34, C23C 16/40

(54) **Verglasungselement und Verfahren zu dessen Herstellung**
Glazing unit and method for its production
Elément de vitrage et procédé pour sa fabrication

(30) Priorität: 17.08.2005 DE 102005038901
(43) Veröffentlichungstag der Anmeldung: 21.02.2007
(73) Patentinhaber: INTERPANE Entwicklungs- und Beratungsgesellschaft mbH & Co. KG, 37697 Lauenförde (DE)
(72) Erfinder: Mönnekes, Jörg, 37671 Höxter (DE); Weis, Hansjörg Dr., 37671 Höxter (DE); Häuser, Karl, 37688 Beverungen (DE); Segner, Johannes Dr., 88212 Ravensburg (DE)
(74) Vertreter: Körfer, Thomas

(56) Entgegenhaltungen:
- EP-A- 1 602 633
- EP-A- 1 679 291
- EP-A1- 1 188 716
- EP-A2- 1 199 288
- WO-A-03/027015
- DE-U1-6202005 019 79
- US-A1- 2004 087 139

## Beschreibung

Die Erfindung betrifft ein Verglasungselement mit einer reflexionsmindernden Schicht und ein Verfahren zu dessen Herstellung.

Aufgrund der ständig steigenden Energiepreise wird in letzter Zeit verstärkt versucht, die im Sonnenlicht enthaltene Energie zu nutzen. Dies geschieht beispielsweise mit Wärmeabsorbern oder Photovoltaik-Modulen. Solche Energiewandler werden meist mit einer Glasscheibe vor Witterungseinflüssen geschützt. Um einen möglichst hohen Wirkungsgrad zu erreichen, ist es daher wünschenswert, den durch die Verglasung hindurchtretenden Energieanteil des Lichts zu maximieren.

Um die Reflexionen zur verringern, die an den Übergängen zwischen den angrenzenden Medien sowie dem Glas auftreten, werden an einer oder mehreren Oberflächen der Verglasungen reflexionsmindernde Schichten eingesetzt. Bei den reflexionsmindernden Beschichtungen lassen sich grob Einfachschichten und Interferenzschichtpakete unterscheiden. Bei den Einfachschichten werden die Schichtdicke und der Brechungsindex nach der Fresnel'schen Formel n_{Schicht}= (n_{Luft}·n_{Glas})^{1/2} aufeinander abgestimmt. Die erreichbaren Restreflexionen von Einfachschichten liegen zwar über denen von Interferenzschichtpaketen, die reflexionsmindernde Wirkung erstreckt sich jedoch gleichzeitig über einen größeren Wellenlängenbereich. Die in einem kleineren Wellenlängenbereich erreichbaren niedrigen Restreflexionen von Interferenzschichtpaketen werden durch das Aufbringen von mehreren aufeinander abgestimmten Schichten erreicht, wodurch jedoch die Herstellung deutlich aufwendiger und somit auch kostenintensiver wird.

Einfachschichten haben zudem den Vorteil, dass die Reflexionsminderung weitgehend unabhängig vom Winkel des einfallenden Lichtes ist. Im Gegensatz zu Mehrfachschichten wirkt sich die Änderung der Weglänge bei schrägem Einfall durch die Schicht nicht so stark aus, wodurch es zu einer verbesserten Farbanmutung kommt. Die Schichtsysteme werden in der Regel auf Glas als tragendem Substrat eingesetzt. Um den Lichtdurchtritt möglichst wenig durch das Glas selbst zu verschlechtern, wird zumeist eisenarmes Floatglas eingesetzt.

Ein mögliches Verfahren zur Erzeugung entspiegelnder Schichten ist das sogenannte CVD-Verfahren (Chemical Vapour Deposition), mit dem Schichten erzeugbar sind, deren Brechungsindex kleiner als der des Glases ist. Insbesondere ist es bekannt, Magnesiumfluorid auf der Glasoberfläche abzuscheiden. Die so erzeugten Schichten sind jedoch wasserlöslich und wenig stabil und daher ungeeignet, um hieraus Schichten zur Reflexionsminderung herzustellen, die einem Witterungseinfluss oder mechanischen Einflüssen bei der weiteren Verarbeitung ausgesetzt sind. Solche Schichtsysteme sind beispielsweise als Low-E-Schichten bekannt, die aus mehreren aufeinander abgestimmten Einzellagen bestehen und wegen ihrer mangelnden Beständigkeit auf den zueinander gewandten Oberflächen von aus zwei Scheiben bestehenden Isolierverglasungen angeordnet werden müssen.

Eine weitere Möglichkeit zur Herstellung von reflexionsmindernden Schichten ist das Aufbringen einer Schicht in einem Tauch- oder Sprühverfahren. Dabei wird aus einer Lösung ein Gemisch aus einem Lösungsmittel und Siliziumdioxidpartikeln auf der Oberfläche der Scheibe aufgetragen. Durch eine, meist thermische, Nachbehandlung werden anschließend die Lösungsmittel zumindest teilweise aus der aufgebrachten Schicht entfernt, so dass die Siliziumdioxidkügelchen zu einem festen Verbund sintern. Diese Struktur enthält Hohlräume, welche durch Mehrfachreflexion zu einer Minderung des die gesamte offenporige Schicht charakterisierenden Brechungsindex führen. Ein solcher Prozess, bei dem ein Lösungsmittel nachträglich aus der Schicht entfernt wird, führt jedoch zu einer Porengröße, welche eine offenporige Struktur ergibt. Die offenporige Struktur kann einen Teil des erwünschten Effekts wieder zunichte machen, indem sich Wasser an der Außenseite der Beschichtung in den offenen Poren absetzt und so den Brechungsindexunterschied zu dem Glas reduziert. Auch sind mehrlagige Schichtsysteme mittels des Tauchverfahrens realisierbar. Diese führen jedoch zu einer Erhöhung der Reflexion im Bereich des Infraroten. Das Aufbringen solcher Schichten, welche Hohlräume enthalten, mittels eines Tauch- oder Sprühverfahrens hat weiterhin prozesstechnische Nachteile. So ist es beispielsweise nicht möglich, eine gleichmäßige Schichtdicke zu erzielen, da sich zum Randbereich des zu beschichtenden Substrats eine Schichtdickenänderung ergibt. Dies führt zu einer unerwünschten Veränderung der Restreflexion. In der Regel werden beschichtete Randbereiche der Substrate für die meisten Anwendungen verworfen.

Weiterhin ist es bei dem Tauchverfahren nachteilig, dass jeweils alle Oberflächen des eingetauchten Substrats gleichermaßen beschichtet werden. Ist eine Beschichtung auf beiden Seiten des Substrats nicht sinnvoll, so muss mit aufwendigen Maßnahmen die Beschichtung der zweiten Seite verhindert werden oder aber die Schicht nachträglich entfernt werden.

Aufgrund der Oberflächenspannung des flüssigen Tauchbads ergeben zudem Verunreinigungen, die auf der Glasoberfläche vorhanden sein können, eine optische Vergrößerung von Fehlern der Glasoberfläche.

Es ist die Aufgabe der vorliegenden Erfindung, ein Verglasungselement mit zumindest zwei Substraten und ein Herstellungsverfahren hierfür zu schaffen, wobei der Gesamtenergiedurchlassgrad für das Verglasungselement verbessert ist und welches auch bei einem der Witterung ausgesetzten Einsatz diese Eigenschaften über einen langen Zeitraum beibehält.

Die Aufgabe wird durch das erfindungsgemäße Verglasungselement mit den Merkmalen des Anspruchs 1 und das Herstellungsverfahren nach Anspruch 25 gelöst.

Das erfindungsgemäße Verglasungselement mit einem ersten lichtdurchlässigen Substrat und einem zweiten lichtdurchlässigen Substrat weist erfindungsgemäß eine reflexionsmindernde Schicht auf, die durch ein PVD- oder ein CVD-Verfahren abgeschieden wird. In der reflexionsmindernden Schicht sind Hohlräume ausgebildet. Die in der reflexionsmindernden Schicht ausgebildeten Hohlräume führen zu einer Reduzierung des Brechungsindex in der reflexionsmindernden Schicht, so dass ein in einem geeigneten Verhältnis bezüglich des Brechungsindex des Substrats stehender Brechungsindex der Schicht realisierbar ist. Durch diese Einstellung des Brechungsindex mit Hilfe der in der Schicht angeordneten Hohlräume ergibt sich die gewünschte entspiegelnde Wirkung.

Eine solche Schicht kann zudem als Einfachschicht ausgebildet sein, womit sich in vorteilhafter Weise ein breitbandiger Entspiegelungseffekt einstellt. Durch das Aufbringen der Schicht mittels PVD- bzw. CVD-Verfahren oder einer Kombination hiervon sinkt wegen der verschobenen Größenverteilungen der Poren zu kleineren Größen hin der Anteil an zur Oberfläche offenen Poren. Durch diese Reduktion der zur Oberfläche offenen Poren tritt eine Veränderung aufgrund von Witterungseinflüssen nicht ein und eine Reinigung der Oberflächen ist leichter möglich. Gleichzeitig ist eine homogene Schichtdicke über die gesamte Substratoberfläche erreichbar und das Auftreten von optischen Vergrößerungen von Fehlstellen an der Substratoberfläche wird vermieden.

Vorteilhafte Weiterbildungen des erfindungsgemäßen Verglasungselements sind in den Unteransprüchen ausgeführt.

Insbesondere ist es vorteilhaft, bei dem Verglasungselement an einer der zueinander gewandten Oberflächen der beiden Substrate eine Low-E-Schicht oder eine Sonnenschutzschicht vorzusehen. Die positiven Eigenschaften einer solchen Schicht werden durch die zusätzlich erfindungsgemäß vorhandene reflexionsmindernde, durch ein PVD-oder CVD-Verfahren aufgebrachte Schicht ergänzt. Damit wird dem zusätzlichen Verlust durch Reflexion an jeder weiteren vorhandenen Luft-Glas-Grenzfläche entgegengewirkt.

Weiterhin ist es vorteilhaft, die reflexionsmindernde Schicht als eine einlagige Schicht auszubilden. Mit einer reflexionsmindernden Schicht, welche durch PVD- bzw. CVD-Verfahren aufgetragen ist und in der Hohlräume zur Brechungsindexminderung angeordnet sind, lässt sich eine Verbesserung des Gesamtenergiedurchlassgrads bereits bei einer einzelnen Schicht realisieren. Die einzelne Schicht hat dabei den Vorteil, dass sie in lediglich einem einzigen Prozessschritt erzeugt werden kann.

Besonders gute optische Eigenschaften ergeben sich, wenn die reflexionsmindernde Schicht zumindest eine Lage aufweist, welche Silizium, Sauerstoff, Kohlenstoff und Wasserstoff enthält. Besonders vorteilhaft ist die Kombination der reflexionsmindernden Schicht an einer Oberfläche eines der Substrate mit einer weiteren reflexionsmindernden Schicht, die an einer weiteren Oberfläche der Substrate angeordnet ist.

Die optischen Eigenschaften der reflexionsmindernden Schichten lassen sich dabei weiter verbessern, wenn die Zusammensetzung in der reflexionsmindernden Schicht jeweils einen Gradienten aufweist, insbesondere, wenn der Kohlenstoffanteil in Richtung der substratabgewandten Oberfläche der reflexionsmindernden Schicht zunimmt.

Eine weitere Verbesserung der reflexionsmindernden Wirkung ergibt sich, wenn die reflexionsmindernde Schicht zumindest eine erste Lage und eine zweite Lage aufweist. Die erste Lage hat dabei bevorzugt einen von der zweiten Lage abweichenden Silizium- und Sauerstoffanteil. Bevorzugt enthält die erste Lage einen geringeren Anteil Silizium und einen geringeren Anteil Sauerstoff.

Um die Stabilität der reflexionsmindernden Schicht weiter zu verbessern, ist es außerdem vorteilhaft, zusätzlich als Schutzschicht eine Deckschicht auf der reflexionsmindernden Schicht anzuordnen, wobei die zusätzliche Deckschicht im wesentlichen Kohlenstoff und Fluor enthält.

Besonders gute Eigenschaften der reflexionsmindernden Schicht ergeben sich, wenn insbesondere der Anteil an kleinen Poren in der reflexionsmindernden Schicht hoch ist. Die durch die Aufbringung der reflexionsmindernden Schicht mittels eines PVD- und CVD-Verfahrens sich einstellende Porengröße liegt im Bereich einiger Nanometer und ist somit kleiner als die Wellenlänge des einfallenden Lichtes.

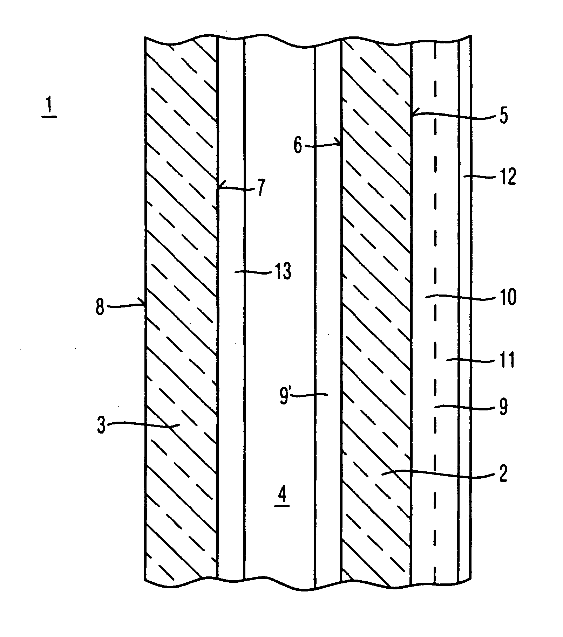

Ein Ausführungsbeispiel für ein erfindungsgemäßes Verglasungselement ist in Fig. 1 vereinfacht dargestellt und wird in der nachfolgenden Beschreibung erläutert. Es zeigt:
- Fig. 1: eine schematische Darstellung eines Schnittes durch ein erfindungsgemäßes Verglasungselement.

In Fig. 1 ist ein erfindungsgemäßes Verglasungselement in einem Teilschnitt dargestellt. Das Verglasungselement 1 umfasst ein erstes Substrat 2 und ein zweites Substrat 3. Die Substrate 2 und 3 sind bevorzugt aus demselben Material ausgeführt, welches lichtdurchlässig ist. Ein besonders bevorzugtes Material ist Floatglas, welches eisenarm ist, um die Absorption des sichtbaren Lichts innerhalb des Glases gering zu halten.

Die Substrate 2 und 3 sind über einen nicht dargestellten Randverbund dichtend miteinander verbunden, wobei ein Zwischenraum 4, der zwischen dem ersten Substrat 2 und dem zweiten Substrat 3 ausgebildet ist, vorzugsweise mit Argon gefüllt ist.

Bei der in Fig. 1 dargestellten Anordnung ist der Gebäudeinnenbereich bzw. das abzudeckende Gerät, beispielsweise ein Solarkollektor, rechts angeordnet. Die Wetterseite ist daher die in der Fig. 1 links dargestellte Seite. Das Verglasungselement 1 weist eine erste Substratoberfläche 5, eine zweite Substratoberfläche 6, eine dritte Substratoberfläche 7 sowie eine vierte Substratoberfläche 8 auf. Die zweite und dritte Substratoberfläche 6, 7 sind einander zugewandt und begrenzen den Zwischenraum 4.

Auf der ersten Substratoberfläche 5 ist bei dem erfindungsgemäßen Verglasungselement 1 eine reflexionsmindernde Schicht 9 angeordnet. Die reflexionsmindernde Schicht 9 besteht im einfachsten Fall aus einer einlagigen Schicht. In dem dargestellten Ausführungsbeispiel ist die reflexionsmindernde Schicht 9 durch eine erste Lage 10 und eine zweite Lage 11 ausgebildet. In der Darstellung ist die erste Lage 10 unmittelbar auf dem ersten Substrat 2 angeordnet und bildet damit eine substratnahe Lage aus. Über der substratnahen ersten Lage 10 ist eine zweite Lage 11 angeordnet, die auch als substratferne Lage bezeichnet wird. Um die reflexionsmindernde Schicht 9 im Hinblick auf ihre Beständigkeit und Stabilität weiter zu verbessern, ist abschließend eine Deckschicht 12 aufgebracht. Die Deckschicht 12 wird vorzugsweise ebenfalls durch PVD- bzw. CVD-Verfahren aufgebracht. Eine weitere reflexionsmindernde Schicht 9' ist auf der zweiten Oberfläche 6 des ersten Substrats 2 ausgebildet. Die weitere reflexionsmindernde Schicht ist z. B. einlagig.

In der Fig. 1 ist auf der dritten Substratoberfläche 7 eine weitere Schicht 13 angeordnet. Die weitere Schicht 13 kann beispielsweise eine sogenannte Low-E-Schicht oder eine Sonnenschutzschicht sein. Die Low-E-Schicht wird vorzugsweise ebenfalls durch ein PVD- oder CVD-Verfahren aufgebracht und enthält neben einer meist aus Silber bestehenden infrarotreflektierenden Schicht auf beiden Seiten der infrarotreflektierenden Schicht zumindest eine Entspiegelungsschicht.

Der Aufbau der reflexionsmindernden Schicht 9 ergibt sich nachfolgend noch durch die Beschreibung des bei dem Aufbringen verwendeten Verfahrens im Detail.

Gemäß einer bevorzugten Ausführungsform ist das erste Substrat 2 sowie das zweite Substrat 3 ein Floatglas, welches thermisch vorgespannt sein kann. Zusätzlich zu dem Aufbringen der reflexionsmindernden Schicht 9 auf der ersten Substratoberfläche 5 des ersten Substrats 2 kann auch auf den übrigen Substratoberflächen 6 bis 8 des ersten bzw. des zweiten Substrats 2, 3 eine oder mehrere reflexionsmindernde Schichten angeordnet werden. Durch zusätzliche reflexionsmindernde Schichten wird der Gesamtenergiedurchlassgrad erhöht und somit die Reduzierung des Gesamtenergiedurchlassgrads durch die Erhöhung der Anzahl der Grenzflächen zwischen den Substraten und den angrenzenden Medien entgegengewirkt.

Zum Erzeugen der reflexionsmindernden Schicht 9 wird vorzugsweise auf einer Oberfläche des ersten transparenten Substrats 2 eine Ausgangsschicht aufgebracht, die Silizium, Sauerstoff, Kohlenstoff und Wasserstoff enthält. Bei dieser zunächst ohne Hohlräume aufgebrachten Ausgangsschicht werden anschließend Hohlräume in der reflexionsmindernden Schicht 9 erzeugt, indem nach dem Aufbringen der Ausgangsschicht der Kohlenstoff- und Wasserstoffgehalt in der Schicht reduziert wird. Es entstehen in der Schicht 9 damit Hohlräume geringer Größe und es ergibt sich eine homogene Schicht. Diese homogene Schicht 9 wird aufgrund der geringen Abmessungen der Hohlräume durch einfallendes Licht als homogenes System angesehen, dessen Brechungsindex gegenüber einer reinen Siliziumdioxidumgebung reduziert ist.

Eine solchermaßen erzeugte reflexionsmindernde Schicht 9 ist ausreichend stabil, um einen zusätzlichen Schutz für weitere Prozessschritte in der Verarbeitung des Verglasungselements 1 zu erübrigen. So kann insbesondere das vorbereitete Substrat 2 geschnitten werden oder auch der Randverbund erzeugt werden, ohne dass mit einer Beschädigung der reflexionsmindernden Schicht 9 zu rechnen ist. In einer bevorzugten Ausführungsform des erfindungsgemäßen Verglasungsmaterials 1 ist die reflexionsmindernde Schicht 9 durch die Verminderung des Kohlenstoff- und Wasserstoffgehalts aus einer Ausgangsschicht erzeugt, welche 5 bis 30 Atom-% Silizium, 20 bis 60 Atom-% Sauerstoff, 20 bis 30 Atom-% Kohlenstoff und 20 bis 30 Atom-% Wasserstoff enthält. Die Ausgangsschicht und somit letztlich auch die reflexionsmindernde Schicht hat vorzugsweise eine Schichtdicke im Bereich von 5 bis 400 nm. Bevorzugt beträgt die Schichtdicke 50 bis 200 nm und besonders bevorzugt beträgt sie 60 bis 150 nm.

Zur Erzeugung der Hohlräume innerhalb der reflexionsmindernden Schicht 9 wird nach dem Aufbringen der Ausgangsschicht auf dem Substrat 2 ein Prozessschritt durchgeführt, mit dem der Kohlenstoff- und Wasserstoffgehalt reduziert wird. Vorzugsweise wird dieser Schritt durch das Tempern des ersten Substrats 2 durchgeführt. Die Tempertemperaturen liegen dabei in einem Bereich von 250 bis 800°C, wobei die Temperdauer vorzugsweise weniger als 30 min beträgt. Mit der reflexionsmindernden Schicht 9 wird die Lichttransmission des beschichteten Substrats 2 gegenüber einem unbeschichteten Substrat 2 um mindestens 1 % verbessert. Der Gesamtenergiedurchlassgrad des Verglasungselements wird damit um mindestens 0,7 % verbessert. Eine besonders gute reflexionsmindernde Schicht erhält man, wenn das Tempern in einem Bereich von maximal 700°C und in einem Zeitraum von weniger als 15 min einschließlich Aufheiz- und Haltezeit durchgeführt wird.

Eine Reduzierung des Kohlenstoff- und Wasserstoffgehalts in der Schicht 9 kann auch ohne Tempern bei einer Durchführung des Abscheideverfahrens in Gegenwart von Sauerstoff erfolgen. Dabei wird vorzugsweise ein Sauerstoffplasma eingesetzt. Die bevorzugte Schichtdicke in diesem Fall beträgt höchstens 250 nm, bevorzugt 30 bis 250 nm und besonders bevorzugt 50 bis 150 nm.

Die Abscheidung der Ausgangsschicht, die aus mindestens einer Lage besteht, die Silizium, Sauerstoff, Kohlenstoff und Wasserstoff enthält, wird durch einen PVD-Prozess, einen CVD-Prozess oder eine Kombination aus beiden Prozessen durchgeführt. Das Sputtern der mindestens einen Lage wird vorzugsweise durch Sputtern von Silizium oder Siliziumdioxid in reaktiver Gasatmosphäre durchgeführt. Als Reaktivgas kann eine Mischung aus Alkenen und/oder Alkenen mit Sauerstoff, Argon und/oder Sauerstoff eingesetzt werden. Weiterhin ist es bevorzugt, dem Reaktivgas siliziumhaltige Gase zuzusetzen, wobei die Konzentration der zugesetzten siliziumhaltigen Gase höchstens 5 Atom-% des Gesamtgasflusses beträgt.

Das Abscheiden der mindestens einen Schicht kann alternativ mittels eines CVD-Verfahrens bevorzugt mit Plasmaunterstützung erfolgen.

Alternativ kann die Abscheidung der mindestens einen Ausgangsschicht, die Silizium, Sauerstoff, Kohlenstoff und Wasserstoff enthält, nach einem CVD-Verfahren, bevorzugt mit Plasmaunterstützung, auf dem Substrat abgeschieden werden.

Bei einer bevorzugten Ausführung des Beschichtungsverfahrens enthält der Gasraum eine Mischung aus Sauerstoff, mindestens einer siliziumhaltigen Verbindung und/oder kohlenstoffhaltigen Verbindung und/oder eines Edelgases. Die siliziumhaltige Verbindung enthält bevorzugt mindestens ein Sauerstoffatom direkt an das Siliziumatom gebunden.

Das Plasma im CVD-Verfahren kann durch Radiofrequenz- und/oder Mikrowellenstrahlung angeregt werden. Die Anregungsstrahlung kann dem Plasma kontinuierlich oder in zeitlich begrenzten Pulsen zugeführt werden.

In einer besonderen bevorzugten Ausführungsform wird die Plasmaanregung gepulst betrieben. Mit dieser Verfahrensweise erreicht man die Darstellung der Schichtzusammensetzung in Form eines Gradienten, wobei die Pulspause dafür genutzt wird, die Zusammensetzung der Schicht zu steuern. Kürzere Pulspausen haben eine Erhöhung des Kohlenstoffanteils in der Schicht bei ansonsten gleichen Abscheidebedingungen zur Folge. Lediglich durch Varianten der Pulspause ist der Aufbau einer Gradientenschicht möglich.

Bei dieser Ausführungsform wird die Pulsdauer im Bereich von 0,1 bis 10 ms variiert und die Pulspause im Verhältnis 1:1 bis 1:500 zur Pulsdauer eingestellt.

Die Schicht kann auch einer Anordnung von mehreren, hintereinander geschalteten Abscheidequellen abgeschieden werden. Das Substrat durchläuft die verschiedenen Abscheidequellen, wobei sich die Schicht Quelle für Quelle aufbaut. Durch Varianten der Gaszusammensetzung und/oder der Dauer der Pulspause können so Gradientenschichten hergestellt werden.

In einem bevorzugten Schichtaufbau wird in der Antireflexschicht der Kohlenstoff- und Wasserstoffgehalt mit zunehmendem Abstand von der Substratfläche reduziert. Die Konzentrationsveränderung kann dabei kontinuierlich oder in Sprüngen erfolgen. In einer bevorzugten Ausführung wird eine Antireflexschicht in zwei Teilen auf mindestens einer Substratseite abgeschieden, deren substratnaher Teil, S₁, vor dem Entfernen des Kohlenstoffs aus der Schicht, 5 bis 30 Atom-% Silizium, 20 bis 60 Atom-% Sauerstoff, 2 bis 30 Atom-% Kohlenstoff - vorzugsweise ≥ 15 Atom-% Kohlenstoff - und 2 bis 30 Atom-% Wasserstoff - vorzugsweise ≤ 15 Atom-% Wasserstoff - umfasst und die vom Substrat entferntere Schicht, S₂, 20 bis 35 Atom-% Silizium, 40 bis 67 Atom-% Sauerstoff und 0 bis 15 Atom-% Kohlenstoff und 5 bis 20 Atom-% Wasserstoff umfasst. Das Verhältnis der Schichtdicken der beiden Bereiche dS₁:dS₂ ist dabei bevorzugt > 5.

Die Oberfläche der mindestens einen Schicht kann abschließend hydrophob eingestellt werden. Diese Hydrophobisierung erfolgt durch eine weitere Behandlung in einem mindestens silizium- und kohlenstoffhaltigen Plasma.

Eine weitere Hydrophobisierung kann erfolgen, indem eine weitere Deckschicht abgeschieden wird, die im wesentlichen aus Kohlenstoff und Fluor besteht.

Die Dicke der Deckschicht sollte mindestens 0,3 nm aufweisen. Die kohlenstoff- und fluorhaltige Schicht kann ebenfalls durch eine Plasmabehandlung in einem flouriertem Kohlenwasserstoff abgeschieden werden.

Der Nutzen der Hydrophobisierungsschicht besteht darin, dass Wasser oder andere hydrophile Medien nicht oder nur erschwert mit der Schicht in Wechselwirkung treten können. Die Einfachheit der Reinigung der Schicht und ihre Langlebigkeit steigt. Darüber hinaus führt die hydrophobe Schicht oder Schichtoberfläche dazu, dass Wasser nur in großen Tropfen aufkondensiert und diese von einem nur wenig schräg geneigten Substrat rasch ablaufen. Damit wird die Lichtdurchlässigkeit bereits ab den frühen Morgenstunden auch bei Kondensatbildung (Tau) aus der Atmosphäre sichergestellt. Der Gesamtnutzungsgrad eines Solarkollektors (Wärme oder Strom) oder über die Zeit integrierte Lichtdurchlass einer Gewächshausscheibe steigt an.

Die reflexionsmindernde Schicht 9 ist auf einem transparenten Substrat angeordnet, das einen Brechungsindex n von n > 1,4 aufweist. Die reflexionsmindernde Schicht enthält Silizium, Sauerstoff, Kohlenstoff und Wasserstoff und weist einen zweiten Brechungsindex n' von n' < 1,32 auf. Die reflexionsmindernde Schicht 9 kann nach dem erfindungsgemäßen Verfahren hergestellt werden. Die reflexionsmindernde Schicht 9 zeichnet sich dadurch aus, dass der Porenanteil von Poren mit einem mittleren Durchmesser von > 3 nm weniger als 10 Vol.- %, bevorzugt weniger als 4 Volumen- %, beträgt.

Die reflexionsmindernde Schicht kann in einer bevorzugten Ausführungsform eine sich kontinuierlich oder diskontinuierlich verändernde Kohlenstoffkonzentration aufweisen, wobei die Konzentration an Kohlenstoff in der Nähe der substratabgewandten Seite der Schicht kleiner ist als in der Nähe des Substrates.

In einer weiteren Ausführungsform ist auf der reflexionsmindernden Schicht eine zusätzliche Hydrophobisierungsschicht von ≥ 0,3 nm Dicke aufgebracht. Bevorzugt umfasst die Hydrophobisierungsschicht mindestens 50 Atom- % Kohlenstoff.

Das einseitig oder zweiseitig beschichtete Substrat 2 wird anschließend mit dem zweiten Substrat 3 kombiniert. Hierzu werden die beiden Substrate 2, 3 parallel zueinander angeordnet und über einen Randverbund fixiert. Es ergibt sich so das erfindungsgemäße Verglasungselement 1.

Vor dem Verbinden der beiden Substrate 2, 3 können weitere reflexionsmindernde Schichten 9, 9' auch auf das zweite Substrat 3 aufgetragen werden. Es können auch nur auf einem Teil der Substratoberflächen 5, 6, 7, 8 die reflexionsmindernden Schichten 9, 9' angeordnet sein. Ein Teil der übrigen Substratoberflächen kann dagegen mit alternativen Schichten beschichtet sein.

### Beispiel 1

In dem ersten Ausführungsbeispiel eines erfindungsgemäßen Verglasungselements 1 wurde als erstes Substrat 2 eine 4 mm dicke Floatglasscheibe mit einer Lichttransmission von 90 % auf der ersten Substratoberfläche 5 und der zweiten Substratoberfläche 6 mit einer reflexionsmindernden Schicht 9, 9' beschichtet. Zum Aufbringen der Schicht wurde ein plasmaunterstütztes CVD-Verfahren verwendet. Die so erzeugten Ausgangsschichten wurde durch Tempern des ersten Substrats 2 bei einer Maximaltemperatur von 650°C für 5 min zu den reflexionsmindernden Schichten 9, 9' weitergebildet. Die Lichttransmission des Substrats 2 erhöht sich dadurch auf 95,5 %. Der Gesamtenergiedurchlassgrad, ermittelt nach DIN EN 410, ergibt sich zu 89,8 %.

Das mit den reflexionsmindernden Schichten 9, 9' versehene erste Substrat 2 ist mit einem zweiten Substrat 3 zu einem Verglasungselement 1 kombiniert, wobei das zweite Substrat 3 ebenfalls eine 4 mm dicke Floatglasscheibe mit einer Lichttransmission von 90 % ist. Das erste Substrat 2 und das zweite Substrat 3 sind durch einen Randverbund miteinander verbunden, wodurch ein 16 mm dicker Zwischenraum entstand. Dieser Zwischenraum 4 ist mit 90 % Argon gefüllt. Auf der dritten Substratoberfläche 7 ist eine Low-E-Schicht angeordnet.

Das zweite Substrat 3 mit der darauf angebrachten Low-E-Beschichtung auf der dritten Substratoberfläche 7 weist eine Emissivität von 3,4 % sowie eine Lichttransmission von 88,3 % auf. Der Gesamtenergiedurchlassgrad ergibt sich zu 61,7 %. Das aus den beiden Substraten 2, 3 sich ergebende Verglasungselement 1 weist eine Gesamtlichttransmission von 85 % sowie einen Gesamtenergiedurchlassgrad von 63 % auf. Der Energiedurchtritt beträgt 1,1 W/cm²/K auf. Damit liegen die Gesamtlichttransmission und der Gesamtenergiedurchlassgrad im Bereich der Werte einer unbeschichteten Einzelscheibe. Die Verschlechterung, die sich durch die zusätzlichen Reflexionen bei Mehrscheibensystemen ergibt, wird durch die Verwendung der reflexionsmindernden Schichten 9, 9' auf dem ersten Substrat bei dem erfindungsgemäßen Verglasungselement 1 kompensiert und es ergibt sich ein erhöhter Gesamtenergiedurchlass.

Das Beispiel 1 entspricht damit in seinem Aufbau dem Verglasungselement 1 der Fig. 1. Allerdings sind die reflexionsmindernden Schichten 9, 9' vorzugsweise identisch aufgebaut und einlagig ausgeführt.

### Beispiel 2

Die Verwendung von zwei auf jeweils beiden Substratoberflächen 5, 6, 7, 8 mit einer reflexionsmindernden Schicht 9 beschichteten Substraten 2, 3, ergeben ein Verglasungsmaterial 1 mit einer Gesamtlichttransmission von 91,2 % und einem Gesamtenergiedurchlassgrad von 80 %. Die reflexionsmindernden Schichten 9 auf den Substratoberflächen 5, 6, 7, 8 entsprechen den reflexionsmindernden Schichten 9, 9' des ersten Substrats 2 des Beispiels 1. Die Verwendung von unbeschichteten Substraten führt bei einem Verglasungsmaterial mit zwei Scheiben zu einer Lichttransmission von 82 % und einem Gesamtenergiedurchlassgrad von 77,4 %, woraus sich unmittelbar ergibt, dass die Beschichtung der einzelnen Substrate gemäß der vorliegenden Erfindung zu erheblichen Erhöhung der Lichttransmission sowie des Gesamtenergiedurchlassgrades führen.

### Beispiel 3

In einem dritten Beispiel wurde zusätzlich zu dem ersten Substrat 2, welches in bereits beschriebener Weise beidseitig mit den reflexionsmindernden Schichten 9, 9' beschichtet ist, ein zweites Substrat 3 verwendet, welches an der dritten Substratoberfläche 7 mit einer Sonnenschutzschicht und auf der vierten Substratoberfläche 8 mit einer weiteren reflexionsmindernden Schicht beschichtet ist. Für die Sonnenschutzschicht ergibt sich eine Lichttransmission von 67,7 % und ein Gesamtenergiedurchlassgrad von 37,1 %. Die Kombination dieser beschichteten Substrate 2, 3 in dem Verglasungsmaterial 1 ergibt eine Gesamtlichttransmission von 69,5 % sowie einen Gesamtenergiedurchlassgrad von 38,0 %. Die Farbneutralität wird beschrieben durch einen Rₐ-Wert, der sowohl für das Verglasungselement 1 mit reflexionsmindernden Beschichtungen als auch ohne reflexionsmindernde Beschichtungen bei R_{aR} = 96 und R_{aD} = 93 liegt. Eine Veränderung der Farbanmutung durch die zusätzliche reflexionsmindernde Schicht ergibt sich daher nicht.

Das erfindungsgemäße Verglasungselement 1 ist vorzugsweise einsetzbar als Fenster oder Fassadenelement, beispielsweise in einem Gebäude. Ebenso kann das Verglasungselement 1 auch als Fahrzeugverglasung eingesetzt werden. Weitere Anwendungen sind Elemente eines Herdes oder Kühlmöbels. Das erfindungsgemäße Verglasungselement eignet sich z. B. als Abdeckscheibe für einen Sonnenkollektor mit thermischer und/oder photovoltaischer Funktionsweise.

Die Erfindung ist nicht auf die beschriebenen Ausführungsbeispiele beschränkt.

## Patentansprüche

1. Verglasungselement mit einem ersten lichtdurchlässigen Substrat (2) und einem benachbart dazu angeordneten zweiten lichtdurchlässigen Substrat (3), wobei mindestens auf einer Substratoberfläche (5, 6, 7, 8) durch ein PVD- oder ein CVD-Verfahren eine reflexionsmindernde Schicht (9, 9') abgeschieden ist und in der reflexionsmindernden Schicht (9, 9') Hohlräume derart ausgebildet sind, dass die von diesen Hohlräumen durchsetzte Schicht insgesamt homogen ist.

2. Verglasungselement nach Anspruch 1,
**dadurch gekennzeichnet,**
**dass** eine Low-E-Schicht (13) auf zumindest einer der zueinander orientierten Substratoberflächen (6, 7) angeordnet ist.

3. Verglasungselement nach Anspruch 1,
**dadurch gekennzeichnet,**
**dass** eine Sonnenschutzschicht (13) auf zumindest einer der zueinander orientierten Substratoberflächen (6, 7) angeordnet ist.

4. Verglasungselement nach einem der Ansprüche 1 bis 3,
**dadurch gekennzeichnet,**
**dass** zumindest eines der Substrate (2, 3) aus einem Glas besteht.

5. Verglasungselement nach Anspruch 4,
**dadurch gekennzeichnet,**
**dass** zumindest ein gläsernes Substrat (2, 3) thermisch vorgespannt ist.

6. Verglasungselement nach einem der Ansprüche 1 bis 5,
**dadurch gekennzeichnet,**
**dass** die reflexionsmindernde Schicht (9, 9') eine einlagige Schicht ist.

7. Verglasungselement nach einem der Ansprüche 1 bis 6,
**dadurch gekennzeichnet,**
**dass** die reflexionsmindernde Schicht (9, 9') zumindest eine Lage (10, 11) enthält, die Silizium, Sauerstoff, Kohlenstoff und Wasserstoff aufweist.

8. Verglasungselement nach Anspruch 7,
**dadurch gekennzeichnet,**
**dass** in der reflexionsmindernden Schicht (9, 9') der Kohlenstoffgehalt höchstens 15 Atom-% und/oder der Wasserstoffgehalt 10 Atom-% beträgt.

9. Verglasungselement nach Anspruch 8,
**dadurch gekennzeichnet,**
**dass** in der reflexionsmindernden Schicht (9, 9') der Kohlenstoffgehalt 5 Atom-% und der Wasserstoffgehalt weniger als 10 Atom-% beträgt.

10. Verglasungselement nach einem der Ansprüche 1 bis 9,
**dadurch gekennzeichnet,**
**dass** mindestens eine weitere Substratoberfläche (5, 6, 7, 8) des ersten Substrats (2) und/oder des zweiten Substrats (3) mit einer weiteren mittels eines PVD- oder VCD-Verfahrens aufgebrachten reflexionsmindernden Schicht (9, 9') beschichtet ist.

11. Verglasungselement nach einem der Ansprüche 1 bis 10,
**dadurch gekennzeichnet,**
**dass** die reflexionsmindernde Schicht (9, 9') eine Dicke von 5 nm bis 400 nm ausweist.

12. Verglasungselement nach Anspruch 11,
**dadurch gekennzeichnet,**
**dass** die reflexionsmindernde Schicht (9, 9') eine Dicke von 50 nm bis 200 nm aufweist.

13. Verglasungselement nach Anspruch 12,
**dadurch gekennzeichnet,**
**dass** die reflexionsmindernde Schicht (9, 9') eine Dicke von 60 nm bis 150 nm aufweist.

14. Verglasungselement nach einem der Ansprüche 1 bis 13,
**dadurch gekennzeichnet,**
**dass** eine Oberfläche der reflexionsmindernden Schicht (9, 9') hydrophob ist.

15. Verglasungselement nach einem der Ansprüche 1 bis 14,
**dadurch gekennzeichnet,**
**dass** die Zusammensetzung der reflexionsmindernden Schicht (9, 9') einen Gradienten aufweist.

16. Verglasungselement nach Anspruch 15,
**dadurch gekennzeichnet,**
**dass** der Kohlenstoffanteil in Richtung der Oberfläche der reflexionsmindernden Schicht (9, 9') zunimmt.

17. Verglasungselement nach einem der Ansprüche 1 bis 16,
**dadurch gekennzeichnet,**
**dass** mindestens eine reflexionsmindernde Schicht (9) zumindest eine erste Lage (10) und eine zweite Lage (11) aufweist, wobei die erste Lage (10) einen geringeren Siliziumanteil und einen geringeren Sauerstoffanteil aufweist als die zweite Lage (11) und sich der mittlere Durchmesser der Hohlräume in der ersten und der zweiten Lage unterscheidet.

18. Verglasungselement nach einem der Ansprüche 1 bis 17,
**dadurch gekennzeichnet,**
**dass** auf der reflexionsmindernden Schicht (9) zumindest eine Deckschicht (12) angeordnet ist, die im wesentlichen Kohlenstoff und Fluor enthält.

19. Verglasungselement nach Anspruch 18,
**dadurch gekennzeichnet,**
**dass** die Deckschicht (12) eine Dichte von mindestens 0,3 nm aufweist.

20. Verglasungselement nach einem der Ansprüche 1 bis 19,
**dadurch gekennzeichnet,**
**dass** jedes Substrat (2, 3), auf dem eine reflexionsmindernde Schicht (9, 9') angeordnet ist, einen Brechungsindex n aufweist, der größer als 1,4 ist und
**dass** die jeweiligen reflexionsmindernden Schichten (9, 9') einen zweiten Brechungsindex n' von höchstens 1,32 aufweist.

21. Verglasungselement nach einem der Ansprüche 1 bis 20,
**dadurch gekennzeichnet,**
**dass** in der reflexionsmindernden Schicht (9, 9') der Porenanteil mit einem mittleren Porendurchmesser von mehr als 3 nm höchstens 10 Vol.-% beträgt.

22. Verglasungselement nach Anspruch 21,
**dadurch gekennzeichnet,**
**dass** in der reflexionsmindernden Schicht (9, 9') der Porenanteil mit einem mittleren Porendurchmesser von mehr als 3 nm höchstens 4 Vol.-% beträgt.

23. Verglasungselement nach einem der Ansprüche 1 bis 22,
**dadurch gekennzeichnet,**
**dass** die reflexionsmindernde Schicht (9) eine substratnahe erste Lage (10) und eine substratferne zweite Lage (11) aufweist und die substratferne Lage (11) einen Kohlenstoffanteil von höchstens 5 Atom-% aufweist.

24. Verglasungselement nach Anspruch 23,
**dadurch gekennzeichnet,**
**dass** die substratferne Lage (11) einen Kohlenstoffanteil von höchstens 3 Atom-% aufweist.

25. Verfahren zur Herstellung eines Verglasungselements mit einer reflexionsmindernden Beschichtung mit folgenden Verfahrensschritten:
- Abscheiden mindestens einer Schicht, die Silizium, Sauerstoff, Kohlenstoff und Wasserstoff enthält, auf mindestens einer Substratoberfläche (5, 6) eines ersten Substrats (2);
- Reduzieren der Kohlenstoff- und Wasserstoffkonzentration in dieser mindestens einen Schicht (9) und
- Verbinden des ersten Substrats (2) mit einem zweiten Substrat (3) zu einem Verglasungselement (1).

26. Verfahren nach Anspruch 25,
**dadurch gekennzeichnet,**
**dass** zur Bildung der mindestens einen Schicht 5 bis 30 Atom-% Silizium, 20 bis 60 Atom-% Sauerstoff, 2 bis 30 Atom-% Kohlenstoff und 2 bis 30 Atom-% Wasserstoff eingesetzt werden.

27. Verfahren nach Anspruch 25 oder Anspruch 26,
**dadurch gekennzeichnet,**
**dass** der Kohlenstoffgehalt auf < 15 Atom- % und der Wasserstoffgehalt auf < 20 Atom- % reduziert werden.

28. Verfahren nach Anspruch 27,
**dadurch gekennzeichnet,**
**dass** der Kohlenstoffgehalt auf 5 Atom- % und der Wasserstoffgehalt auf < 10 Atom- % reduziert werden.

29. Verfahren nach einem der Ansprüche 25 bis 28,
**dadurch gekennzeichnet,**
**dass** die mindestens eine Schicht (9) auf beiden Seiten (5, 6; 7,8) des Substrats (2, 3) abgeschieden wird.

30. Verfahren nach einem der Ansprüche 25 bis 29,
**dadurch gekennzeichnet,**
**dass** die mindestens eine Schicht (9) in einer Schichtdicke im Bereich von 5 bis 400 nm auf dem Substrat (2, 3) abgeschieden wird.

31. Verfahren nach Anspruch 30,
**dadurch gekennzeichnet,**
**dass** die Schichtdicke 50 bis 200 nm beträgt.

32. Verfahren nach Anspruch 31,
**dadurch gekennzeichnet,**
**dass** die Schichtdicke 60 bis 150 nm beträgt.

33. Verfahren nach einem der Ansprüche 25 bis 32,
**dadurch gekennzeichnet,**
**dass** die mindestens eine Schicht (9) getempert wird.

34. Verfahren nach Anspruch 33,
**dadurch gekennzeichnet,**
**dass** die Schicht (9, 9') bei einer Temperatur im Bereich von 250 bis 800 °C für einen Zeitraum von weniger als 30 Minuten getempert wird.

35. Verfahren nach Anspruch 34,
**dadurch gekennzeichnet,**
**dass** bei einer Temperatur im Bereich von maximal 700°C für einen Zeitraum von weniger als 15 Minuten getempert wird.

36. Verfahren nach einem der Ansprüche 25 bis 32,
**dadurch gekennzeichnet,**
**dass** die mindestens eine Schicht in Gegenwart von Sauerstoff behandelt wird.

37. Verfahren nach Anspruch 36,
**dadurch gekennzeichnet,**
**dass** ein Sauerstoffplasma eingesetzt wird.

38. Verfahren nach Anspruch 36 oder 37,
**dadurch gekennzeichnet,**
**dass** die Substrattemperatur zwischen Raumtemperatur und 350 °C eingestellt wird.

39. Verfahren nach Anspruch 38,
**dadurch gekennzeichnet,**
**dass** die Substrattemperatur im Bereich zwischen 180 °C und 350 °C eingestellt wird.

40. Verfahren nach einem der Ansprüche 25 bis 39,
**dadurch gekennzeichnet,**
**dass** als transparentes Substrat (2, 3) eine Glas- oder Kunststoffscheibe verwendet wird.

41. Verfahren nach Anspruch 40,
**dadurch gekennzeichnet,**
**dass** die Scheibe eine Floatglasscheibe ist.

42. Verfahren nach einem der Ansprüche 25 bis 41,
**dadurch gekennzeichnet,**
**dass** die mindestens eine Schicht (9, 9') in einem PVD-Prozess, einem CVD-Prozess oder einer Kombination aus beiden Prozessen abgeschieden wird.

43. Verfahren nach Anspruch 42,
**dadurch gekennzeichnet,**
**dass** die mindestens eine Schicht (9, 9') durch Sputtern von Silizium oder Siliziumdioxid in reaktiver Gasatmosphäre abgeschieden wird.

44. Verfahren nach Anspruch 43,
**dadurch gekennzeichnet,**
**dass** als Reaktivgas eine Mischung aus Alkenen und/oder Alkenen mit Sauerstoff, Argon und/oder Wasserstoff eingesetzt wird.

45. Verfahren nach Anspruch 43 oder 44,
**dadurch gekennzeichnet,**
**dass** dem Reaktivgas siliziumhaltige Gase in einer Konzentration von ≤ 5 Atom-% des Gesamtgasflusses beigemischt werden.

46. Verfahren nach Anspruch 45,
**dadurch gekennzeichnet,**
**dass** die mindestens eine Schicht (9, 9') in einem CVD-Verfahren, ggf. mit Plasmaunterstützung, auf dem Substrat abgeschieden wird.

47. Verfahren nach Anspruch 46,
**dadurch gekennzeichnet,**
**dass** eine Mischung aus Sauerstoff, mindestens einer siliziumhaltigen Vorrichtung und/oder kohlenstoffhaltigen Verbindung und/oder eines Edelgases im Gasraum eingesetzt wird.

48. Verfahren nach Anspruch 46 oder 47,
**dadurch gekennzeichnet,**
**dass** das Plasma durch Radiofrequenz- und/oder Mikrowellenstrahlung angeregt wird.

49. Verfahren nach Anspruch 48,
**dadurch gekennzeichnet,**
**dass** die Plasmaanregung gepulst betrieben wird.

50. Verfahren nach Anspruch 49,
**dadurch gekennzeichnet,**
**dass** die Schichtzusammensetung als Gradient dargestellt wird.

51. Verfahren nach Anspruch 49 oder 50,
**dadurch gekennzeichnet,**
**dass** der Kohlenstoffanteil in der Schicht (9, 9') erhöht wird.

52. Verfahren nach Anspruch 51,
**dadurch gekennzeichnet,**
**dass** die Pulsdauer im Bereich von 0,1 bis 10 ms variiert wird und die Pulspause im Verhältnis 1:1 bis 1:500 zur Pulsdauer eingestellt wird.

53. Verfahren nach einem der Ansprüche 25 bis 52,
**dadurch gekennzeichnet,**
**dass** zwei Lagen (10, 11) auf mindestens einer Substratseite abgeschieden werden, wobei die substratnahe Lage (10), vor dem Entfernen des Kohlenstoffs, 5 bis 30 Atom- % Silizium, 20 bis 60 Atom- % Sauerstoff, 2 bis 30 Atom- % Kohlenstoff und 2 bis 30 Atom- % Wasserstoff umfasst und die substratentfernte Lage (11) 20 bis 35 Atom- % Silizium, 40 bis 67 Atom- % Sauerstoff und 0 bis 15 Atom- % Kohlenstoff und 5 bis 20 Atom- % Wasserstoff umfasst.

54. Verfahren nach einem der Ansprüche 25 bis 53,
**dadurch gekennzeichnet,**
**dass** die mindestens eine Schicht (9, 9') auf ihrer Oberfläche hydrophob eingestellt wird.

55. Verfahren nach Anspruch 54,
**dadurch gekennzeichnet,**
**dass** die Hydrophobisierung durch Behandlung in einem mindestens silizium- und kohlenstoffhaltigen Plasma durchgeführt wird.

56. Verfahren nach einem der Ansprüche 25 bis 55,
**dadurch gekennzeichnet,**
**dass** über der mindestens einen Schicht eine Deckschicht (12) abgeschieden wird, die im wesentlichen aus Kohlenstoff und Fluor besteht.

57. Verfahren nach Anspruch 56,
**dadurch gekennzeichnet,**
**dass** die Deckschicht (12) eine Dicke von mindestens 0,3 nm aufweist.

## Claims

1. Glazing element having a first optically transparent substrate (2) and a second optically transparent substrate (3) arranged adjacent thereto, wherein a reflection-reducing layer (9, 9') is deposited on at least one substrate surface (5, 6, 7, 8) by a PVD or CVD method, and cavities are formed in the reflection-reducing layer (9, 9') so that the layer permeated by these cavities is homogeneous overall.

2. Glazing element according to Claim 1,
**characterised in that**
a low-E layer (13) is arranged on at least one of the substrate surfaces (6, 7) oriented towards one another.

3. Glazing element according to Claim 1,
**characterised in that**
a solar protection layer (13) is arranged on at least one
of the substrate surfaces (6, 7) oriented towards one another.

4. Glazing element according to one of Claims 1 to 3,
**characterised in that**
at least one of the substrates (2, 3) consists of a glass.

5. Glazing element according to Claim 4,
**characterised in that**
at least one vitreous substrate (2, 3) is thermally prestressed.

6. Glazing element according to one of Claims 1 to 5,
**characterised in that**
the reflection-reducing layer (9, 9') is a single-level layer.

7. Glazing element according to one of Claims 1 to 6,
**characterised in that**
the reflection-reducing layer (9, 9') contains at least one level (10, 11) which comprises silicon, oxygen, carbon and hydrogen.

8. Glazing element according to Claim 7,
**characterised in that**
the carbon content in the reflection-reducing layer (9, 9') is at most 15 atom-% and/or the hydrogen content is 10 atom-%.

9. Glazing element according to Claim 8,
**characterised in that**
the carbon content in the reflection-reducing layer (9, 9') is 5 atom-% and the hydrogen content is less than 10 atom-%.

10. Glazing element according to one of Claims 1 to 9,
**characterised in that**
at least one further substrate surface (5, 6, 7, 8) of the first substrate (2) and/or of the second substrate (3) is coated with a further reflection-reducing layer (9, 9') applied by means of a PVD or VCD method.

11. Glazing element according to one of Claims 1 to 10,
**characterised in that**
the reflection-reducing layer (9, 9') has a thickness of from 5 nm to 400 nm.

12. Glazing element according to Claim 11,
**characterised in that**
the reflection-reducing layer (9, 9') has a thickness of from 50 nm to 200 nm.

13. Glazing element according to Claim 12,
**characterised in that**
the reflection-reducing layer (9, 9') has a thickness of from 60 nm to 150 nm.

14. Glazing element according to one of Claims 1 to 13,
**characterised in that**
the surface of the reflection-reducing layer (9, 9') is hydrophobic.

15. Glazing element according to one of Claims 1 to 14,
**characterised in that**
the composition of the reflection-reducing layer (9, 9') has a gradient.

16. Glazing element according to Claim 15,
**characterised in that**
the carbon component increases in the direction of the surface of the reflection-reducing layer (9, 9').

17. Glazing element according to one of Claims 1 to 16,
**characterised in that**
at least one reflection-reducing layer (9) comprises at least a first level (10) and a second level (11), the first level (10) having a lower silicon component and a lower oxygen component than the second level (11), and the average diameter of the cavities in the first and second levels being different.

18. Glazing element according to one of Claims 1 to 17,
**characterised in that**
at least one cover layer (12), which essentially contains carbon and fluorine, is arranged on the reflection-reducing layer (9).

19. Glazing element according to Claim 18,
**characterised in that**
the cover layer (12) has a thickness of at least 0.3 nm.

20. Glazing element according to one of Claims 1 to 19,
**characterised in that**
each substrate (2, 3), on which a reflection-reducing layer (9, 9') is arranged, has a refractive index n which is greater than 1.4, and
**in that** the respective reflection-reducing layer (9, 9') has a second refractive index n' of at most 1.32.

21. Glazing element according to one of Claims 1 to 20,
**characterised in that**
the pore fraction with an average pore diameter of more than 3 nm in the reflection-reducing layer (9, 9') is at most 10 vol.-%.

22. Glazing element according to Claim 21,
**characterised in that**
the pore fraction with an average pore diameter of more than 3 nm in the reflection-reducing layer (9, 9') is at most 4 vol.-%.

23. Glazing element according to one of Claims 1 to 22,
**characterised in that**
the reflection-reducing layer (9) has a first level (10) near the substrate and a second level (11) remote from the substrate, and the level (11) remote from the substrate has a carbon component of at most 5 atom-%.

24. Glazing element according to Claim 23,
**characterised in that**
the level (11) remote from the substrate has a carbon component of at most 3 atom-%.

25. Method for producing any glazing element with a reflection-reducing coating, having the following method steps:
- depositing at least one layer, which contains silicon, oxygen, carbon and hydrogen, on at least one substrate surface (5, 6) of a first substrate (2);
- reducing the carbon and hydrogen concentrations in the at least one layer (9) and
- bonding the first substrate (2) with a second substrate (3) to form a glazing element (1).

26. Method according to Claim 25,
**characterised in that**
from 5 to 30 atom-% silicon, from 20 to 60 atom-% oxygen, from 2 to 30 atom-% carbon and from 2 to 30 atom-% hydrogen are used in order to form the at least one layer.

27. Method according to Claim 25 or 26,
**characterised in that**
the carbon content is reduced to < 15 atom-% and the hydrogen content is reduced to < 20 atom-%.

28. Method according to Claim 27,
**characterised in that**
the carbon content is reduced to 5 atom-% and the hydrogen content is reduced to < 10 atom-%.

29. Method according to one of Claims 25 to 28,
**characterised in that**
the at least one layer (9) is deposited on both sides (5, 6; 7, 8) of the substrate (2, 3).

30. Method according to one of Claims 25 to 29,
**characterised in that**
the at least one layer (9) is deposited with a layer thickness in the range of from 5 to 400 nm on the substrate (2, 3).

31. Method according to Claim 30,
**characterised in that**
the layer thickness is from 50 to 200 nm.

32. Method according to Claim 31,
**characterised in that**
the layer thickness is from 60 to 150 nm.

33. Method according to one of Claims 25 to 32,
**characterised in that**
the at least one layer (9) is heat-treated.

34. Method according to Claim 33,
**characterised in that**
the layer (9, 9') is heat-treated at a temperature in the range of from 250 to 800°C for a period of less than 30 minutes.

35. Method according to Claim 34,
**characterised in that**
the heat treatment is carried out at a temperature in the range of at most 700°C for a period of less than 15 minutes.

36. Method according to one of Claims 25 to 32,
**characterised in that**
the at least one layer is treated in the presence of oxygen.

37. Method according to Claim 36,
**characterised in that**
an oxygen plasma is used.

38. Method according to Claim 36 or 37
**characterised in that**
the substrate temperature is adjusted between room temperature and 350°C.

39. Method according to Claim 38,
**characterised in that**
the substrate temperature is adjusted between 180°C and 350°C.

40. Method according to one of Claims 25 to 39,
**characterised in that**
a glass or plastic pane is used as the transparent substrate (2, 3).

41. Method according to Claim 40,
**characterised in that**
the pane is a float glass pane.

42. Method according to one of Claims 25 to 41,
**characterised in that**
the at least one layer (9, 9') is deposited by a PVD process, a CVD process or a combination of the two processes.

43. Method according to Claim 42,
**characterised in that**
the at least one layer (9, 9') is deposited by sputtering silicon or silicon dioxide in a reactive gas atmosphere.

44. Method according to Claim 43,
**characterised in that**
a mixture of alkenes and/or alkenes with oxygen, argon and/or hydrogen is used as the reactive gas.

45. Method according to Claim 43 or 44,
**characterised in that**
gases containing silicon are added to the reactive gas in a concentration of ≤ 5 atom-% of the total gas flow.

46. Method according to Claim 45,
**characterised in that**
the at least one layer (9, 9') is deposited on the substrate by a CVD method, optionally with plasma enhancement.

47. Method according to Claim 46,
**characterised in that**
a mixture of oxygen, at least one silicon-containing device and/or carbon compound and/or a noble gas is used in the gas space.

48. Method according to Claim 46 or 47,
**characterised in that**
the plasma is excited by radiofrequency and/or microwave radiation.

49. Method according to Claim 48,
**characterised in that**
the plasma excitation is operated in pulsed fashion.

50. Method according to Claim 49,
**characterised in that**
the layer composition is represented as a gradient.

51. Method according to Claim 49 or 50,
**characterised in that**
the carbon component in the layer (9, 9') is increased.

52. Method according to Claim 51,
**characterised in that**
the pulse duration is varied in the range of from 0.1 to 10 ms and the pulse pause is adjusted in a ratio of from 1:1 to 1:500 to the pulse duration.

53. Method according to one of Claims 25 to 52,
**characterised in that**
two levels (10, 11) are deposited on at least one substrate side, the level (10) near the substrate comprising from 5 to 30 atom-% silicon, from 20 to 60 atom-% oxygen, from 2 to 30 atom-% carbon and from 2 to 30 atom-% hydrogen before the carbon is removed, and the level (11) remote from the substrate comprising from 20 to 35 atom-% silicon, from 40 to 67 atom-% oxygen and from 0 to 15 atom-% carbon and from 5 to 20 atom-% hydrogen.

54. Method according to one of Claims 25 to 53,
**characterised in that**
the at least one layer (9, 9') is adjusted hydrophobically on its surface.

55. Method according to Claim 54,
**characterised in that**
the hydrophobisation is carried out by treatment in a plasma containing at least silicon and carbon.

56. Method according to one of Claims 25 to 55,
**characterised in that**
a cover layer (12), which consists essentially of carbon and fluorine, is deposited over the at least one layer.

57. Method according to Claim 56,
**characterised in that**
the cover layer (12) has a thickness of at least 0.3 nm.

## Revendications

1. Elément de vitrage avec un premier substrat (2) translucide et un deuxième substrat (3) translucide, adjacent à ce dernier, un revêtement (9, 9') diminuant la réflexion étant déposé sur au moins une surface de substrat (5, 6, 7, 8) par un procédé PVD ou un procédé CVD et des cavités étant réalisées dans le revêtement (9, 9') diminuant la réflexion, de telle sorte que le revêtement traversé par ces cavités est homogène dans l'ensemble.

2. Elément de vitrage selon la revendication 1,
**caractérisé en ce**
**qu'**un revêtement faiblement émissif (13) est disposé sur au moins une des surfaces de substrat (6, 7) orientées l'une vers l'autre.

3. Elément de vitrage selon la revendication 1,
**caractérisé en ce**
**qu'**un revêtement de protection solaire (13) est disposé sur au moins une des surfaces de substrat (6, 7) orientées l'une vers l'autre.

4. Elément de vitrage selon l'une quelconque des revendications 1 à 3,
**caractérisé en ce**
**qu'**au moins un des substrats (2, 3) est réalisé en verre.

5. Elément de vitrage selon la revendication 4,
**caractérisé en ce**
**qu'**au moins un substrat en verre (2, 3) est précontraint thermiquement.

6. Elément de vitrage selon l'une quelconque des revendications 1 à 5,
**caractérisé en ce**
**que** le revêtement (9, 9') diminuant la réflexion est un revêtement à une couche.

7. Elément de vitrage selon l'une quelconque des revendications 1 à 6,
**caractérisé en ce**
**que** le revêtement (9, 9') diminuant la réflexion comporte au moins une couche (10, 11), qui contient du silicium, de l'oxygène, du carbone et de l'hydrogène.

8. Elément de vitrage selon la revendication 7,
**caractérisé en ce**
**que** dans le revêtement (9, 9') diminuant la réflexion la teneur en carbone est au maximum de 15 % en atome et/ou la teneur en hydrogène est de 10 % en atome.

9. Elément de vitrage selon la revendication 8,
**caractérisé en ce**
**que**, dans le revêtement (9, 9') diminuant la réflexion, la teneur en carbone est de 5 % en atome et la teneur en hydrogène est inférieure à 10 % en atome.

10. Elément de vitrage selon l'une quelconque des revendications 1 à 9,
**caractérisé en ce**
**qu'**au moins une autre surface (5, 6, 7, 8) du premier substrat (2) et du deuxième substrat (3) est revêtue d'un autre revêtement (9, 9') diminuant la réflexion déposé par un procédé PVD ou CVD.

11. Elément de vitrage selon l'une quelconque des revendications 1 à 10,
**caractérisé en ce**
**que** le revêtement (9, 9') diminuant la réflexion a une épaisseur de 5 nm à 400 nm.

12. Elément de vitrage selon la revendication 11,
**caractérisé en ce**
**que** le revêtement (9, 9') diminuant la réflexion a une épaisseur de 50 nm à 200 nm.

13. Elément de vitrage selon la revendication 12,
**caractérisé en ce**
**que** le revêtement (9, 9') diminuant la réflexion a une épaisseur de 60 nm à 150 nm.

14. Elément de vitrage selon l'une quelconque des revendications 1 à 13,
**caractérisé en ce**
**qu'**une surface du revêtement (9, 9') diminuant la réflexion est hydrophobe.

15. Elément de vitrage selon l'une quelconque des revendications 1 à 14,
**caractérisé en ce**
**que** la composition du revêtement (9, 9') diminuant la réflexion comporte un gradient.

16. Elément de vitrage selon la revendication 15,
**caractérisé en ce**
**que** la teneur en carbone augmente en direction de la surface du revêtement (9, 9') diminuant la réflexion.

17. Elément de vitrage selon l'une quelconque des revendications 1 à 16,
**caractérisé en ce**
**qu'**au moins un revêtement (9) diminuant la réflexion comporte au moins une première couche (10) et une deuxième couche (11), la première couche (10) ayant une plus faible teneur en silicium et une plus faible teneur en oxygène que la deuxième couche (11) et le diamètre moyen des cavités dans la première et la deuxième couche étant différent.

18. Elément de vitrage selon l'une quelconque des revendications 1 à 17,
**caractérisé en ce**
**que** sur le revêtement (9, 9') diminuant la réflexion est agencée au moins une couche de recouvrement (12), qui contient sensiblement du carbone et du fluor.

19. Elément de vitrage selon la revendication 18,
**caractérisé en ce**
**que** la couche de recouvrement (12) a une épaisseur d'au moins 0,3 nm.

20. Elément de vitrage selon l'une quelconque des revendications 1 à 19,
**caractérisé en ce**
**que** chaque substrat (2, 3) sur lequel est déposé un revêtement (9, 9') diminuant la réflexion possède un indice de diffraction n qui est supérieur à 1,4 et en ce que les revêtements (9, 9') diminuant la réflexion respectifs ont un deuxième indice de diffraction n' qui est supérieur à 1,32.

21. Elément de vitrage selon l'une quelconque des revendications 1 à 20,
**caractérisé en ce**
**que** la proportion de pores avec un diamètre moyen supérieur à 3 nm est au maximum de 10 % en volume dans le revêtement (9, 9') diminuant la réflexion.

22. Elément de vitrage selon la revendication 21,
**caractérisé en ce**
**que** la proportion de pores avec un diamètre moyen supérieur à 3 nm est au maximum de 4 % en volume dans le revêtement (9, 9') diminuant la réflexion.

23. Elément de vitrage selon l'une quelconque des revendications 1 à 22,
**caractérisé en ce**
**que** le revêtement (9) diminuant la réflexion comporte une première couche (10) proche du substrat et une deuxième couche (11) éloignée du substrat, et la couche (11) éloignée du substrat a une teneur en carbone de l'ordre de 5 % en atome au maximum.

24. Elément de vitrage selon la revendication 23,
**caractérisé en ce**
**que** la couche (11) éloignée du substrat a une teneur en carbone de l'ordre de 3 % en atome au maximum.

25. Procédé de réalisation d'un élément de vitrage avec un revêtement diminuant la réflexion, comportant les étapes suivantes :
- application d'au moins un revêtement, qui contient du silicium, de l'oxygène, du carbone et de l'hydrogène, sur au moins une surface (5, 6) d'un premier substrat (2) ;
- diminution de la concentration en carbone et en hydrogène dans ledit au moins un revêtement (9), et
- assemblage du premier substrat (2) avec un deuxième substrat (3) pour former un élément de vitrage (1).

26. Procédé selon la revendication 25,
**caractérisé en ce**
**que** pour former ledit au moins un revêtement, on utilise 5 à 30 % en atome de silicium, 20 à 60 % en atome d'oxygène, 2 à 30 % en atome de carbone et 2 à 30 % en atome d'hydrogène.

27. Procédé selon la revendication 25 ou 26,
**caractérisé en ce**
**que** la teneur en carbone est diminuée à moins de 15 % en atome et la teneur en hydrogène est diminuée à moins de 20 % en atome.

28. Procédé selon la revendication 27,
**caractérisé en ce**
**que** la teneur en carbone est diminuée à 5 % en atome et la teneur en hydrogène est diminuée à moins de 10 % en atome.

29. Procédé selon l'une quelconque des revendications 25 à 28,
**caractérisé en ce**
**que** ledit au moins un revêtement (9) est déposé sur les deux faces (5, 6 ; 7, 8) du substrat (2, 3).

30. Procédé selon l'une quelconque des revendications 25 à 29,
**caractérisé en ce**
**que** ledit au moins un revêtement (9) est déposé sur le substrat (2, 3) avec une épaisseur de couche dans une plage de 5 à 400 nm.

31. Procédé selon la revendication 30,
**caractérisé en ce**
**que** l'épaisseur de couche est de l'ordre de 50 à 200 nm.

32. Procédé selon la revendication 31,
**caractérisé en ce**
**que** l'épaisseur de couche est de l'ordre de 60 à 150 nm.

33. Procédé selon l'une quelconque des revendications 25 à 32,
**caractérisé en ce**
**que** ledit au moins un revêtement (9) est durci par trempe.

34. Procédé selon la revendication 33,
**caractérisé en ce**
**que** le revêtement (9, 9') est durci par trempe à une température dans une plage de 250 à 800°C pendant une période inférieure à 30 minutes.

35. Procédé selon la revendication 34,
**caractérisé en ce**
**que** le durcissement par trempe est effectué à une température 700°C maximum pendant une période inférieure à 15 minutes.

36. Procédé selon l'une quelconque des revendications 25 à 32,
**caractérisé en ce**
**que** ledit au moins un revêtement est traité en présence d'oxygène.

37. Procédé selon la revendication 36,
**caractérisé en ce**
**qu'**un plasma d'oxygène est utilisé.

38. Procédé selon la revendication 36 ou 37,
**caractérisé en ce**
**que** la température du substrat est réglée entre la température ambiante et 350°C.

39. Procédé selon la revendication 38,
**caractérisé en ce**
**que** la température du substrat est réglée entre 180°C et 350°C.

40. Procédé selon l'une quelconque des revendications 25 à 39,
**caractérisé en ce**
**que** le substrat (2, 3) transparent utilisé est une vitre en verre ou en matière plastique.

41. Procédé selon la revendication 40, **caractérisé en ce que** la vitre est une vitre en verre flotté.

42. Procédé selon l'une quelconque des revendications 25 à 41,
**caractérisé en ce**
**que** ledit au moins un revêtement (9, 9') est déposé dans un processus PVD, un processus CVD ou une combinaison des deux processus.

43. Procédé selon la revendication 42,
**caractérisé en ce**
**que** ledit au moins un revêtement (9, 9') est déposé par pulvérisation de silicium ou de dioxyde de silicium dans une atmosphère gazeuse réactive.

44. Procédé selon la revendication 43,
**caractérisé en ce**
**que** le gaz réactif utilisé est un mélange d'alcènes et/ou d'alcènes avec de l'oxygène, de l'argon et/ou de l'hydrogène.

45. Procédé selon la revendication 43 ou 44,
**caractérisé en ce**
**que** des gaz contenant du silicium sont ajoutés au gaz réactif dans une concentration ≤ 5 % en atome du flux gazeux total.

46. Procédé selon la revendication 45,
**caractérisé en ce**
**que** ledit au moins un revêtement (9, 9') est déposé sur le substrat dans un procédé CVD, le cas échéant avec assistance par plasma.

47. Procédé selon la revendication 46,
**caractérisé en ce**
**qu'**on utilise un mélange d'oxygène, au moins une préparation contenant du silicium et/ou une liaison contenant du carbone et/ou un gaz rare dans l'enceinte gazeuse.

48. Procédé selon la revendication 46 ou 47,
**caractérisé en ce**
**que** le plasma est excité par un rayonnement à fréquence radio et/ou un rayonnement de micro-ondes.

49. Procédé selon la revendication 48,
**caractérisé en ce**
**que** l'excitation du plasma est obtenue par pulsation.

50. Procédé selon la revendication 49,
**caractérisé en ce**
**que** la composition du revêtement est représentée en tant que gradient.

51. Procédé selon la revendication 49 ou 50,
**caractérisé en ce**
**que** la teneur en carbone est augmentée dans le revêtement (9, 9').

52. Procédé selon la revendication 51,
**caractérisé en ce**
**que** l'on fait varier le temps d'impulsion dans une plage de 0,1 à 10 ms, et l'intervalle entre les impulsions est réglé dans le rapport de 1:1 à 1:500 par rapport au temps d'impulsion.

53. Procédé selon l'une quelconque des revendications 25 à 52,
**caractérisé en ce**
**que** deux couches (10, 11) sont déposées sur au moins une face du substrat, la couche (10) proche du substrat contient, avant l'élimination du carbone, 5 à 30 % en atome de silicium, 20 à 60 % en atome d'oxygène, 2 à 30 % en atome de carbone et 2 à 30 % en atome d'hydrogène, et la couche (11) éloignée du substrat contient 20 à 35 % en atome de silicium, 40 à 67 % en atome d'oxygène, 0 à 15 % en atome de carbone et 5 à 20 % en atome d'hydrogène.

54. Procédé selon l'une quelconque des revendications 25 à 53,
**caractérisé en ce**
**que** ledit au moins un revêtement (9, 9') est défini avec une surface hydrophobe.

55. Procédé selon la revendication 54,
**caractérisé en ce**
**que** l'hydrophobisation est effectuée par un traitement dans un plasma contenant au moins du silicium et du carbone.

56. Procédé selon l'une quelconque des revendications 25 à 55,
**caractérisé en ce**
**que** sur ledit au moins un revêtement est déposée une couche de recouvrement (12), qui est constituée sensiblement de carbone et de fluor.

57. Procédé selon la revendication 56,
**caractérisé en ce**
**que** la couche de recouvrement (12) a une épaisseur de 0,3 nm minimum.
